# EUROPÄISCHE PATENTSCHRIFT

(11) **EP 2 336 643 B1**
(45) Veröffentlichungstag und Bekanntmachung des Hinweises auf die Patenterteilung: **15.07.2020**
(21) Anmeldenummer: 10194312.4
(22) Anmeldetag: 09.12.2010
(51) Int. Cl.: F24C 15/00, A21B 3/04

(54) **HAUSHALTS-GARGERÄT MIT EINEM TRÄGERELEMENT FÜR EINEN VORRATSBEHÄLTER**
DOMESTIC COOKING APPLIANCE WITH A SUPPORT ELEMENT FOR A RESERVOIR
APPAREIL MÉNAGER DE CUISSON AVEC UN ÉLÉMENT DE SUPPORT POUR UN RÉSERVOIR

(30) Priorität: 21.12.2009 DE 102009055074
(43) Veröffentlichungstag der Anmeldung: 22.06.2011
(73) Patentinhaber: BSH Hausgeräte GmbH, 81739 München (DE)
(72) Erfinder: Grobleben, Ralf, 75015, Bretten (DE); Knöller, Thomas, 86356, Neusäß (DE); Nüssler, Gerhard, 80798, München (DE)

(56) Entgegenhaltungen:
- DE-A1-102007 048 200
- DE-T2- 60 316 560
- DE-T2-602005 000 738
- DE-T2-602005 003 267
- JP-A- 2006 153 421
- JP-U- S57 124 332
- US-A1- 2005 155 633

## Beschreibung

Die vorliegende Erfindung betrifft ein Haushaltsgerät gemäß dem Oberbegriff des Patentanspruchs 1.

Aus der Druckschrift DE 29923420 U1 ist ein derartiges Haushaltsgerät in Form eines Backofens bekannt, der einen Vorratsbehälter für eine Flüssigkeit, insbesondere Wasser aufweist. Dieser ist mit dem Backraum derart verbindbar, dass die Flüssigkeit mittelbar oder unmittelbar in den Backraum einleitbar ist. In einer Blende des Haushaltsgeräts ist eine Ausnehmung angeordnet, durch die der Vorratsbehälter schubladenartig eingeschoben, bzw. herausgezogen werden kann.

Der Erfindung liegt die Aufgabe zugrunde, ein Haushaltsgerät nach dem Oberbegriff des Patentanspruchs 1 zu schaffen, das im Inneren des Haushaltsgerätes wenig Bauraum beansprucht.

Diese Aufgabe wird durch ein Haushaltsgerät mit den Merkmalen des Patentanspruchs 1 gelöst. Vorteilhafte Ausgestaltungen sind den Unteransprüchen einzeln oder in Kombination zu entnehmen.

Gemäß dem Oberbegriff des Patentanspruches 1 weist die Bedienblende eine über diese herausragende, erkerartig hervorspringende Abstellfläche für den Vorratsbehälter auf. Diese Abstellfläche ist erfindungsgemäß im Wesentlichen horizontal angeordnet und ermöglicht ein einfaches Aufsetzen des Vorratsbehälters. Durch die Anordnung an der Bedienblende ist die Abstellfläche leicht zugänglich. Gegenüber beispielsweise einem schubladenartig einschiebbaren Vorratsbehälter verbleibt durch die Abstellfläche wesentlich mehr Platz im Inneren des Haushaltsgerätes, insbesondere in einem hinter der Bedienblende angeordneten Schalterraum, um beispielsweise elektrische oder elektronische Komponenten anzuordnen. Der Betriebsflüssigkeitsstand ist durch den außen am Haushaltsgerät angeordneten Vorratsbehälter sichtbar und vom Benutzer jederzeit nachfüllbar, so dass eine Unterbrechung des Betriebes aufgrund mangelnder Betriebsflüssigkeit vermieden wird.

Erfindungsgemäß weist die Abstellfläche eine Öffnung zur Ankopplung des Vorratsbehälters auf. Dadurch entfällt eine entsprechende Öffnung in der Bedienblende, wodurch diese optisch ansprechender wirkt. Durch eine innerhalb und/oder unterhalb der Öffnung angeordnete, nicht näher beschriebene Flüssigkeitskupplung, die beispielsweise aus dem Bereich der Füllbehälter für Kaffeeautomaten bekannt ist, ist Betriebsflüssigkeit in das Haushaltsgerät einleitbar. Die Öffnung in Verbindung mit der Flüssigkeitskupplung hält den abnehmbaren Vorratsbehälter in seiner Position zur Abstellfläche. Um bei Abnahme des Vorratsbehälters evtl. austretende Betriebsflüssigkeit aufzufangen und von der Abstellfläche wegzuleiten, ist in einer vorteilhaften Ausgestaltung die Öffnung in einer Vertiefung der Abstellfläche angeordnet. Die Vertiefung kann beispielsweise aus schrägen Flächenelementen, oder einem konkaven Flächenelement ausgebildet sein, wobei die Öffnung die tiefste Stelle bildet. Jedes Flächenelement bildet eine Teilfläche der Abstellfläche. Befindet sich im Inneren des Haushaltsgerätes ein zusätzlicher Sammelbehälter für die Betriebsflüssigkeit, so ist die aufgefangene Betriebsflüssigkeit über beispielsweise eine Schlauchverbindung von der Abstellfläche in diesen einleitbar.

Durch eine Anordnung der Abstellfläche auf einem Trägerelement sind mit dem Füllbehälter zusammenwirkende Komponenten, wie z. B. eine Flüssigkeitskupplung, eine Schlauchverbindung in das Hausgerät und elektrische Bauteile im Trägerelement unterbringbar und damit von außen nicht sichtbar. Das Trägerelement hat vorzugsweise eine im Wesentlichen quaderförmige Ausprägung und ist zumindest in Teilbereichen hohl ausgebildet.

Erfindungsgemäß ist das Trägerelement in der Bedienblende versenkbar. Dadurch wird bei versenktem Trägerelement eine optisch besonders ansprechende Bedienblende erzeugt. Im Vergleich mit einer Ausführung als schubladenartig einschiebbarer Vorratsbehälter verbleibt im Schalterraum mehr nutzbarer Bauraum. In einer vorteilhaften Ausgestaltung ist das Trägerelement schmäler als der aufsetzbare Vorratsbehälter ausgebildet, wodurch der nutzbare Bauraum im Schalterraum vergrößert wird. Das versenkte Trägerelement schließt erfindungsgemäß bündig mit der Bedienblende ab, wodurch die Bedienblende, insbesondere bei Betriebsarten, die keine Zufuhr von Betriebsflüssigkeit erfordern, optisch ansprechend wirkt. In einer vorteilhaften Weiterbildung ist das Trägerelement bei aufgesetztem Vorratsbehälter gegen Versenken gesperrt. Ein versehentliches Einschieben des Trägerelements in die Schalterblende, sowie ein daraus resultierendes Herunterfallen des mit Betriebsflüssigkeit gefüllten Vorratsbehälters ist dadurch verhindert.

Um eine besonders komfortable Benutzung des Trägerelements zu ermöglichen, ist dieses erfindungsgemäß derart ausgebildet, dass bei Anwahl einer bestimmten Betriebsart und/oder Erreichen eines bestimmten Betriebszustandes des Haushaltsgerätes das Trägerelement durch eine Steuereinheit selbsttätig aus der Bedienblende herausfahrbar ist. Dadurch ist es für den Benutzer des Haushaltsgerätes offensichtlich, dass das Haushaltsgerät Betriebsflüssigkeit benötigt. Das Herausfahren kann elektromotorisch, oder mittels eines elastischen Elements erfolgen. Das elastische Element wird beim Versenken der Abstellfläche vorgespannt und in seiner Versenkstellung verriegelt. Die Verriegelung ist durch die Steuereinheit bedarfsgerecht lösbar und das Trägerelement dadurch aus der Bedienblende herausfahrbar. Ein mit dem Trägerelement gekoppelter Dämpfer bewirkt ein sanftes Herausfahren.

Ist eine Stirnseite des Trägerelements im Wesentlichen rechteckig ausgestaltet, und ist dessen Verhältnis von Höhe zu Breite höchstens eins zu drei, so ergibt sich eine kompakte Bauweise und eine optisch ansprechende Form.

Durch die Anordnung von Trägerelement und aufgesetztem Vorratsbehälter innerhalb der randseitigen Begrenzung der Bedienblende ist eine Benutzung der Tür ohne Einschränkung möglich. Bei einem Haushaltsgerät, das eine oberhalb des Haushaltsgerätes angeordnete Arbeitsplatte aufweist, ist die Arbeitsplatte ebenso ohne Einschränkung nutzbar.

Für eine Vorzentrierung des Vorratsbehälters beim Aufsetzen auf das Trägerelement sind an der Unterseite des Vorratsbehälters Distanzelemente angeordnet, die mit dem Trägerelement korrespondieren. Die Vorzentrierung ermöglicht beispielsweise einen sicheren Eingriff eines am Vorratsbehälter angeordneten Koppelstücks mit einem entsprechenden Gegenstück am Trägerelement. Bei auf die Abstellfläche aufgesetztem Vorratsbehälter bewirken die Distanzelemente zusätzlich eine bessere Fixierung des Vorratsbehälters. Bei nach unten auftragendem Koppelstück ermöglichen die Distanzelemente ein sicheres Abstellen des Vorratsbehälters auf einer ebenen Fläche, indem die Distanzelemente gegenüber dem Koppelstück weiter nach unten vorragend ausgebildet sind.

In einer vorteilhaften Ausgestaltung der Erfindung weist eine Stirnseite des Trägerelements eine Anzeige auf, wodurch ein Betriebszustand des Haushaltsgerätes anzeigbar ist. Insbesondere ein Betriebszustand, der mit der verwendeten Betriebsflüssigkeit in Verbindung steht, wie z.B. das erforderliche Befüllen des Vorratsbehälters mit Wasser für eine Dampffunktion eines Gargerätes, wird angezeigt. In einer bevorzugten Ausführung erstreckt sich das Anzeigeelement über die gesamte Stirnseite des Trägerelements.

Ein zumindest bereichsweise als Lichtleitelement ausgebildeter Vorratsbehälter ermöglicht das Einkoppeln von Licht einer Lichtquelle, die im Trägerelement und/oder in der Bedienblende angeordnet ist. Das in den Vorratsbehälter eingekoppelte Licht kann zur Beleuchtung des gesamten Vorratsbehälters verwendet werden, sofern dieser transluzent ausgebildet ist. Die Beleuchtung kann als dauerhafte Beleuchtung des Vorratsbehälters, oder zur Anzeige eines Betriebszustandes ausgebildet sein. Durch eine blinkende Beleuchtung des Vorratsbehälters ist ein Warnsignal für den Benutzer des Haushaltsgerätes generierbar. Das Warnsignal kann eine Aufforderung für den Benutzer sein, Betriebsflüssigkeit nachzufüllen. Ist der Vorratsbehälter nur teilweise transluzent ausgebildet, dient das eingespeiste Licht nur zur Beleuchtung eines bestimmten Bereichs des Vorratsbehälters. In den transluzenten Bereich des Vorratsbehälters eingebrachte, erhabene und/oder vertiefte Markierungen bilden beispielsweise eine beleuchtete Füllstandsanzeige.

Weitere Merkmale und Vorteile der Erfindung ergeben sich aus der nachfolgenden Beschreibung eines Ausführungsbeispiels unter Bezugnahme auf die beigefügten Figuren. Es zeigen:
**Fig.** 1 In einer perspektivischen Darstellung ausschnittsweise ein Gargerät mit einem ausgefahrenem Trägerelement;
**FIG.** 2 eine Bedienblende des Gargerätes mit einem auf die Abstellfläche aufgesetzten Vorratsbehälter in perspektivischer Darstellung und
**FIG.** 3 in einer perspektivischen Darstellung den Vorratsbehälter.

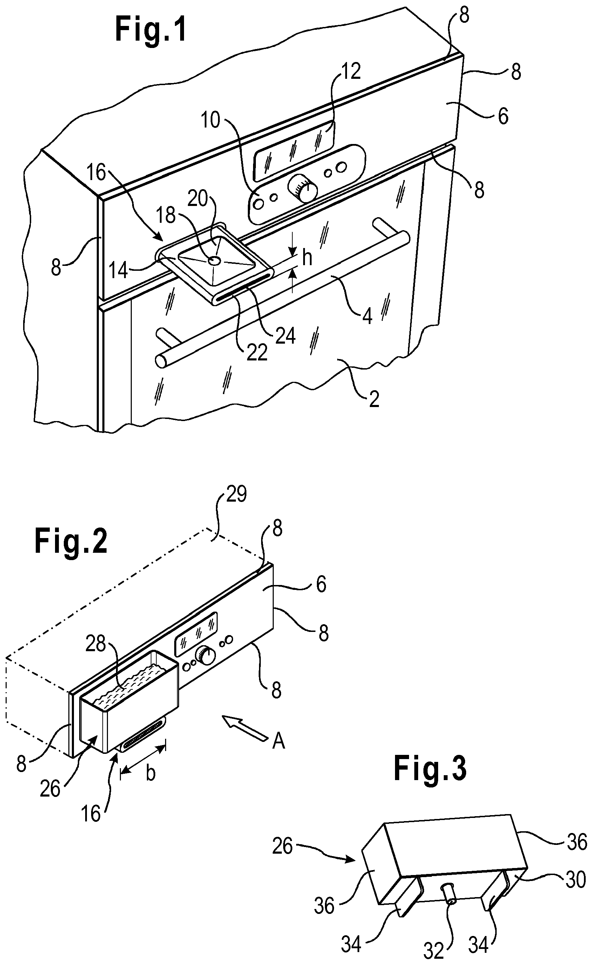

Das in **FIG.1** dargestellte Gargerät mit einer Tür 2 und einem Türgriff 4 weist eine im Wesentlichen senkrechte Bedienblende 6 mit einer randseitigen Begrenzung 8 auf. An der Bedienblende 6 sind Bedienelemente 10 und ein Anzeigeelement 12 angeordnet. An der linken Seite der Bedienblende 6 sind keine Bedienelemente 10 und Anzeigeelemente 12 angeordnet. Die linke Seite weist eine Abstellfläche 14 auf, die auf einem quaderförmigen, hohl ausgebildeten Trägerelement 16 angeordnet ist. Das im Wesentlichen waagerecht angeordnete Trägerelement 16 ist in der Bedienblende 6 flächenbündig versenkbar. Ein nicht dargestellter Versenkmechanismus besteht im Wesentlichen aus einer Feder, die beim Einschieben des Trägerelements 16 in die Bedienblende 6 gespannt wird. Ist die Versenkstellung erreicht, verhindert eine Verriegelung das Ausfahren des Trägerelements 16. Bei Einstellen einer bestimmten Betriebsart bzw. Wählen eines bestimmten Automatik-Programms, bei der das Gargerät Betriebsflüssigkeit 28 benötigt, wird durch eine Steuerelektronik die Verriegelung gelöst. Die vorgespannte Feder schiebt daraufhin das Trägerelement 16 aus der Bedienblende 6 heraus. Ein mit dem Trägerelement 16 verbundener Dämpfer sorgt für ein sanftes Ausfahren des Trägerelements 16. Die Abstellfläche 14 weist in Ihrem Mittelpunkt eine kreisförmige Öffnung 18 auf, die in einer Vertiefung 20 sitzt und in den hohlen Bereich des Trägerelements 16 reicht. Die Vertiefung 20 wird im Wesentlichen aus vier geneigten, über Radien miteinander verbundenen Teilflächen gebildet. Die Öffnung 18 ist an der tiefsten Stelle der geneigten Teilflächen angeordnet. An der Stirnseite 22 des Trägerelements 16 ist eine flächenbündige Anzeige 24 vorgesehen. Die Form der Anzeige 24 folgt der Form der Stirnseite 22 des Trägerelements 16, sodass eine gleichmäßige, umlaufende Randfläche verbleibt. Die umlaufende Randfläche entspricht in Material, Farbe und Oberflächenstruktur dem der Bedienblende 6. Die Anzeige 24 besteht aus einer transluzenten, eingefärbten Kunststofflinse, die durch mehrere Leuchtdioden bedarfsgerecht hinterleuchtet wird.

**Fig.** 2 zeigt die Bedienblende 6 mit ausgefahrenem Trägerelement 16 und einem aufgesetzten Vorratsbehälter 26. In diesem befindet sich Wasser als Betriebsflüssigkeit 28. Eine Breite b der Abstellfläche 14 ist geringer als die Breite des Vorratsbehälters 26. Bei Betrachtung in Blickrichtung A weist der auf die Abstellfläche 14 aufgesetzte Vorratsbehälter 26 zu beiden Seiten einen gleichen Überstand auf. Der Vorratsbehälter 26 ist an seiner Oberseite offen, wodurch Betriebsflüssigkeit 28 jederzeit nachfüllbar ist.

Der Vorratsbehälter 26 aus **Fig.** 2 mit einem an einer Unterseite 30 angeordneten Koppelstück 32 ist in **Fig.** 3 zu sehen. Das Koppelstück 32 ist mittig am Vorratsbehälter 26 angeordnet und weist ein nicht gezeigtes Ventil auf, wodurch ein Auslaufen der Betriebsflüssigkeit 28 bei nicht aufgesetztem, jedoch befülltem Vorratsbehälter 26 verhindert wird. Innerhalb, bzw. unterhalb der Öffnung 18 ist ein Betätigungselement (nicht gezeigt) zum Öffnen des Ventils angeordnet. Das Betätigungselement ist in einem, mit einer Dichtung versehenen Koppelelement (nicht gezeigt) angeordnet. Das Koppelelement stellt eine strömungsleitende Verbindung zwischen dem Koppelstück 32 und einer in das Innere des Gargerätes führenden Flüssigkeitsleitung (nicht gezeigt) her. Zwei als längliche Stege ausgebildete Distanzelemente 34 erstrecken sich parallel zu den Seitenwänden 36 des Vorratsbehälters 26. Die Distanzelemente 34 überragen in Ihrer Höhe das Koppelstück 32, wodurch der Vorratsbehälter 26 auf einer ebenen Fläche abstellbar ist. Die Distanzelemente 34 sind einstückig mit dem Vorratsbehälter 26 als Kunststoff - Spritzgussteil ausgebildet und zentrieren den Vorratsbehälter 26 seitlich beim Aufsetzen auf das Trägerteil 16.
2 Tür
4 Türgriff
6 Bedienblende
8 randseitige Begrenzung
10 Bedienelemente
12 Anzeigeelement
14 Abstellfläche
16 Trägerelement
18 Öffnung
20 Vertiefung
22 Stirnseite
24 Anzeige
26 Vorratsbehälter
28 Betriebsflüssigkeit
29 Schalterraum
30 Unterseite
32 Koppelstück
34 Distanzelement
36 Seitenwand
A Blickrichtung
b Breite
h Höhe

## Patentansprüche

1. Haushalts-Gargerät mit einer Tür (2) und einer im Wesentlichen vertikal angeordneten Bedienblende (6), die ein Trägerelement (16) aufweist, auf dem eine Abstellfläche (14) für einen darauf aufsetzbaren Vorratsbehälter (26) für Betriebsflüssigkeit (28) angeordnet ist und das in der Bedienblende (6) versenkbar ist, wobei
- das Trägerelement (16) in seiner aus der Bedienblende (6) herausragenden Stellung mit der Abstellfläche (14) über die Bedienblende (6) erkerartig hervorspringt und
- das versenkte Trägerelement (16) bündig mit der Bedienblende (6) abschließt, **dadurch gekennzeichnet, dass**
- die Abstellfläche (14) eine im Wesentlichen horizontal angeordnete Abstellfläche ist, welche auf einer Oberseite des Trägerelements (16) ausgebildet ist;
- die Abstellfläche (14) eine Öffnung (18) zur Ankopplung des Vorratsbehälters (26) aufweist,
- das Trägerelement (16) derart ausgebildet ist, dass es bei Anwahl einer bestimmten Betriebsart und/ oder Erreichen eines bestimmten Betriebszustandes des Haushaltsgerätes durch eine Steuereinheit selbsttätig durch eine horizontale Bewegung aus der Bedienblende (6) herausfahrbar ist.

2. Haushalts-Gargerät nach Anspruch 1, **dadurch gekennzeichnet, dass** der Vorratsbehälter (26) nur bei aus der Bedienblende (6) ausgefahrenem Trägerelement (16) auf der Abstellfläche (14) aufsitzen kann.

3. Haushalts-Gargerät nach einem der vorhergehenden Ansprüche, **dadurch gekennzeichnet, dass** innerhalb und/oder unterhalb der Öffnung (18) eine Flüssigkeitskupplung vorhanden ist.

4. Haushalts-Gargerät nach einem der vorhergehenden Ansprüche, **dadurch gekennzeichnet, dass** die Öffnung (18) in einer Vertiefung (20) der Abstellfläche (14) angeordnet ist, wobei die Öffnung (18) die tiefste Stelle der Vertiefung (20) bildet, aus schrägen Flächenelementen oder einem konkaven Flächenelement ausgebildet ist und jedes Flächenelement eine Teilfläche der Abstellfläche (14) bildet.

5. Haushalts-Gargerät nach einem der vorhergehenden Ansprüche, **dadurch gekennzeichnet, dass** das Trägerelement (16) bei aufgesetztem Vorratsbehälter (26) gegen Versenken gesperrt ist.

6. Haushalts-Gargerät nach einem der vorhergehenden Ansprüche, **dadurch gekennzeichnet, dass** das Trägerelement eine im Wesentlichen quaderförmige Ausprägung aufweist und zumindest in Teilbereichen hohl ausgebildet ist.

7. Haushalts-Gargerät nach einem der vorhergehenden Ansprüche, **dadurch gekennzeichnet, dass** das Trägerelement (16) an einer Stirnseite (22) eine Anzeige (24) aufweist, wodurch ein Betriebszustand des Haushaltsgerätes anzeigbar ist.

8. System mit einem Haushalts-Gargerät nach einem der vorhergehenden Ansprüche und einem zum Aufsatz auf die Abstellfläche (14) nur außen an dem Haushalts-Gargerät vorgesehenen Vorratsbehälter (26).

9. System nach Anspruch 8, **dadurch gekennzeichnet, dass** das Trägerelement (16) und der aufgesetzte Vorratsbehälter (26) innerhalb einer randseitigen Begrenzung (8) der Bedienblende (6) angeordnet sind.

10. System nach einem der Ansprüche 8 bis 9, **dadurch gekennzeichnet, dass** der Vorratsbehälter (26) an seiner Unterseite (30) in Blickrichtung (A) seitlich neben dem Trägerelement (16) angeordnete Distanzelemente (34) aufweist, die mit dem Trägerelement (16) korrespondieren.

11. System nach einem der Ansprüche 8 bis 10, **dadurch gekennzeichnet, dass** der Vorratsbehälter (26) zumindest bereichsweise als Lichtleitelement ausgebildet ist.

## Claims

1. Household cooking appliance having a door (2) and a substantially vertically arranged control panel (6) which has a support element (16), on which a storage surface (14) for a storage container (26) for operating liquid (28) that can be placed thereon is arranged and which can be retracted in the control panel (6), wherein
- the support element (16) with the storage surface (14) projects out over the control panel (6) in the manner of an oriel in its position protruding from the control panel (6) and
- the retracted support element (16) terminates flush with the control panel (6), **characterised in that**
- the storage surface (14) is a substantially horizontally arranged storage surface which is embodied on a top side of the support element (16);
- the storage surface (14) has an opening (18) for coupling the storage container (26);
- the support element (16) is embodied such that it can be moved automatically by a horizontal movement out of the control panel (6) by a control unit on selection of a specific operating mode and/or on reaching a specific operating state of the household appliance.

2. Household cooking appliance according to claim 1, **characterised in that** the storage container (26) can sit on the storage surface (14) only when a support element (16) is extended out of the control panel (6).

3. Household cooking appliance according to one of the preceding claims, **characterised in that** a liquid coupling is present inside and/or underneath the opening (18).

4. Household cooking appliance according to one of the preceding claims, **characterised in that** the opening (18) is arranged in a depression (20) of the storage surface (14), wherein the opening (18) forms the deepest point of the depression (20), is formed from inclined surface elements or a concave surface element and each surface element forms a partial surface of the storage surface (14).

5. Household cooking appliance according to one of the preceding claims, **characterised in that** the support element (16) is locked against retraction when a storage container (26) is placed thereon.

6. Household cooking appliance according to one of the preceding claims, **characterised in that** the support element has a substantially cuboidal shape and is embodied as hollow at least in some areas.

7. Household cooking appliance according to one of the preceding claims, **characterised in that** the support element (16) has a display (24) on one end face (22), as a result of which an operating state of the household appliance can be displayed.

8. System having a household cooking appliance according to one of the preceding claims and a storage container (26) intended to be placed onto the storage surface (14) only externally on the household cooking appliance.

9. System according to claim 8, **characterised in that** the support element (16) and the storage container (26) placed thereon are arranged inside an edge border (8) of the control panel (6).

10. System according to one of claims 8 to 9, **characterised in that** the storage container (26) has on its underside (30) in the direction of view (A) spacing elements (34) arranged laterally next to the support element (16), which correspond to the support element (16).

11. System according to one of claims 8 to 10, **characterised in that** the storage container (26) is at least partially embodied as a light-guiding element.

## Revendications

1. Appareil ménager de cuisson comprenant une porte (2) et un bandeau de commande (6) disposé essentiellement verticalement, lequel présente un élément de support (16) sur lequel est disposée une surface de pose (14) pour un récipient de stockage (26) pour liquide de fonctionnement, pouvant être posé sur celle-ci, et lequel peut être encastré dans le bandeau de commande (6),
- l'élément de support (16), dans sa position faisant saillie du bandeau de commande (6), ressortant au-dessus du bandeau de commande (6) en forme d'encorbellement, et
- l'élément de support (16) encastré se raccordant de manière affleurée au bandeau de commande (6),
**caractérisé en ce que**
- la surface de pose (14) est une surface de pose disposée essentiellement horizontalement, laquelle est réalisée sur un côté supérieur de l'élément de support (16) ;
- la surface de pose (14) présente une ouverture (18) pour le couplage du récipient de stockage (26) ;
- l'élément de support (16) est réalisé de manière à ce que, lors de la sélection d'un mode de fonctionnement déterminé et/ou lorsqu'un état de fonctionnement déterminé de l'appareil ménager est obtenu, il puisse être sorti automatiquement du bandeau de commande (6) par un mouvement horizontal au moyen d'une unité de commande.

2. Appareil ménager de cuisson selon la revendication 1, **caractérisé en ce que** le récipient de stockage (26) ne peut reposer sur la surface de pose (14) que lorsque l'élément de support (16) est sorti du bandeau de commande (6).

3. Appareil ménager de cuisson selon l'une quelconque des revendications précédentes, **caractérisé en ce qu'**un raccord de liquide est présent à l'intérieur et/ou en dessous de l'ouverture (18).

4. Appareil ménager de cuisson selon l'une quelconque des revendications précédentes, **caractérisé en ce que** l'ouverture (18) est disposée dans un renfoncement (20) de la surface de pose (14), l'ouverture (18) formant l'endroit le plus profond du renfoncement (20), étant réalisée à partir d'éléments plats inclinés ou d'un élément plat concave, et chaque élément plat formant une surface partielle de la surface de pose (14).

5. Appareil ménager de cuisson selon l'une quelconque des revendications précédentes, **caractérisé en ce que** l'élément de support (16) est bloqué pour éviter qu'il ne s'encastre lorsque le récipient de stockage (26) est posé.

6. Appareil ménager de cuisson selon l'une quelconque des revendications précédentes, **caractérisé en ce que** l'élément de support présente une forme essentiellement parallélépipédique et est réalisé de manière creuse au moins dans des zones partielles.

7. Appareil ménager de cuisson selon l'une quelconque des revendications précédentes, **caractérisé en ce que** l'élément de support (16) présente un affichage (24) sur un côté frontal (22), au moyen duquel un état de fonctionnement de l'appareil ménager peut être affiché.

8. Dispositif comprenant un appareil ménager de cuisson selon l'une quelconque des revendications précédentes et un récipient de stockage (26) ménagé pour être posé sur la surface de pose (14) seulement extérieurement sur l'appareil ménager de cuisson.

9. Dispositif selon la revendication 8, **caractérisé en ce que** l'élément de support (16) et le récipient de stockage (26) posé sont disposés à l'intérieur d'une délimitation (8) côté bord du bandeau de commande (6).

10. Dispositif selon l'une quelconque des revendications 8 à 9, **caractérisé en ce que** le récipient de stockage (26) présente sur son côté inférieur (30) en direction d'observation (A) des éléments d'écartement (34) disposés latéralement à côté de l'élément de support (16), lesquels correspondent à l'élément de support (16).

11. Dispositif selon l'une quelconque des revendications 8 à 10, **caractérisé en ce que** le récipient de stockage (26) est réalisé au moins par endroits en tant qu'élément à fibres optiques.
